# EUROPEAN PATENT SPECIFICATION

(11) **EP 1 409 239 B1**
(45) Date of publication and mention of the grant of the patent: **24.12.2008**
(21) Application number: 02748897.2
(22) Date of filing: 01.07.2002
(51) Int. Cl.: B32B 3/22, B32B 15/08

(54) **METHOD OF MANUFACTURING SURFACE ELEMENT, AND SURFACE ELEMENT**
VERFAHREN ZUR HERSTLELUNG EINES OBERFLÄCHENELEMENTS UND OBERFLÄCHENELEMENT
PROCEDE DE FABRICATION D'ELEMENTS DE SURFACE ET ELEMENT DE SURFACE

(30) Priority: 29.06.2001 FI 20011423
(43) Date of publication of application: 21.04.2004
(73) Proprietor: Innocoating Oy, 01900 Nurmijärvi (FI)
(72) Inventor: TIKKA, Raimo, FIN-28760 Pori (FI)
(74) Representative: Kaukonen, Juha Veikko
(86) International application number: PCT/FI2002/000589
(87) International publication number: WO 2003/002336

(56) References cited:
- EP-A2- 1 092 818
- FI-B- 89 143
- US-A- 4 451 518
- US-A- 4 569 880
- PATENT ABSTRACTS OF JAPAN vol. 6, no. 256 (M-179) 15 December 1982 & JP 57 151 422 A (NISSAN JIDOSHA KK) 18 September 1982

## Description

The invention relates to a method of manufacturing a surface element from a thin metal sheet.

The invention further relates to a surface element formed of a thin metal sheet.

Surface elements made of thin metal sheets are used for various purposes to form a facing e.g. in buildings, in ships and other vehicles. Such a surface element is typically manufactured by bending a metal sheet into a predetermined shape and by coating it thereafter with suitable paint. A problem in the manufacture of such elements is that the thickness of the metal sheet affects the rigidity and behaviour of the element, as well as the acoustics. Particularly when the elements should be made larger, with the present technique it is necessary to increase the thickness of the metal sheet to obtain sufficient rigidity and other properties.

An objective of the invention is to provide a method of manufacturing a surface element, and a surface element, which enable the use of a thinner metal sheet than previously, while providing an element with better properties than in the prior art arrangements.

The method according to the invention is characterized in that the surface of the metal sheet is covered by at least one substantially parallel reinforcing element, and a thermoplastic surface layer forming a facing is glued onto the metal sheet and the reinforcing elements by pressing the plastic layer against the metal sheet and the reinforcing elements and by heating the surface layer during the gluing so that it conforms substantially to the outer surface formed by the metal sheet and the reinforcing elements and fastens the metal sheet and the reinforcing elements together, thus forming the surface element with them.

Further, the surface element according to the invention is characterized in that on the surface of the metal sheet there is at least one reinforcing element substantially parallel with the surface, and a thermoplastic surface layer is glued onto the surface of the metal sheet and the reinforcing elements, the plastic layer being pressed substantially against the outer surface formed by the metal sheet and the reinforcing elements so that it fastens the metal sheet and the reinforcing elements together, thus forming the surface element with them.

According to a basic idea of the invention, on the outer surface of a thin metal sheet there are one or more reinforcing elements, whereafter a thermoplastic surface layer, such as a plastic film or plastic sheet, is glued to the outer surface formed by the metal sheet and the reinforcing elements, the plastic layer being heated during gluing and pressed against the outer surface of the metal sheet and the reinforcing elements such that it conforms thereto, thus affixing the reinforcing elements and the metal sheet together and forming a surface element with them.

According to a preferred embodiment of the invention, reinforcing elements are made of incombustible material, such as profiles formed of a thin metal sheet, wherefore such a surface element can also be used in places that require a high standard of fire safety, e.g. in public premises and in vehicles, such as ships. According to another preferred embodiment of the invention, the reinforcing elements are made of MDF, such as MDF sheets, through machining.

The invention will be described in more detail in the accompanying drawings, in which
Figure 1 shows schematically a surface element according to the invention,
Figure 2 shows schematically a cross-sectional view of a part of the surface element according to Figure 1 taken along the line A-A,
Figure 3 shows schematically an advantageous cross-section of a reinforcing element,
Figures 4a and 4b show schematically examples of perforated metal sheets applicable for manufacturing a surface element, and
Figure 5 shows an embodiment of a surface element according to the invention viewed from the side of the facing.

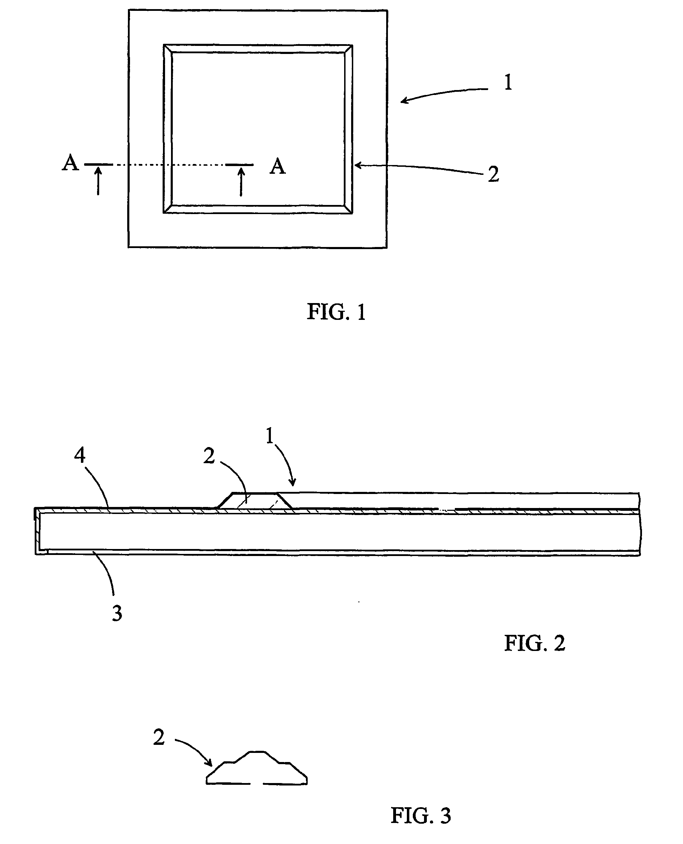

Figure 1 shows schematically a surface element 1 according to the invention viewed from the side of the facing. Below the plastic surface layer provided on the surface of the element and shown in Figure 2, the element comprises reinforcing profiles denoted by arrows 2 in Figure 1, the profiles forming a pattern on the surface of the surface element 1. Depending on the shape of the reinforcing elements 2 and on the location thereof with respect to one another, various patterns can be formed on the surface of the surface element. The patterns can be selected in various ways depending on the required level of reinforcement and the desired appearance.

Figure 2 shows schematically a partial cross-section of the surface element according to Figure 1. As shown in the figure, the frame of the surface element consists of a metal sheet 3 bent e.g. into the same form as in the figure. The shape can vary depending on the type of fasteners used to affix the surface element to the base, and it may comprise various projections, shoulders, openings etc.

On top of the metal sheet 3 there are reinforcing elements 2, which are shaped e.g. like crescents by way of an example, but the cross-section thereof can vary within the limits set by the desired effect and rigidity. The reinforcing elements 2 and the metal sheet 3 are covered by a plastic surface layer 4 which constitutes the facing and is attached by gluing to the metal sheet 3 and the reinforcing elements 2 by heating the surface layer 4 and pressing it against the surface of the metal sheet 3 and the reinforcing elements 2, so that certain parts of the surface element stretch as a result of the heat, thus conforming to the shapes of the surfaces.

The plastic surface layer 4 can be glued in various ways. It can be pressed against the surface of the metal sheet and the reinforcing elements by means of a pressure difference that can be generated either by rapidly sucking air from the other side of the metal sheet or by providing a higher pressure than the atmospheric pressure on the surface facing the surface layer. Naturally, a combination of these methods can also be used. Furthermore, the surface layer 4 can be pressed in place by means of a separate press element, which mechanically presses the surface layer against the metal sheet 3 and the reinforcing element 2 until the layer has assumed a desired shape. In all cases, the surface layer must naturally be heated in connection with the gluing to make it conform to the surface so that the film is able to adhere thereto. The plastic surface layer can be e.g. a PVC sheet or some other suitable plastic film with appropriate heat-dependent plasticity properties, and suitable durability and appearance for the intended purpose. Correspondingly, the plastic surface layer can be formed e.g. of a thin plastic sheet, such as an acryl sheet or the like. The gluing can be carried out by means of heat-activated or compression-activated adhesive or e.g. moisture-activated urethane adhesive, depending on the required properties and conditions of use.

Figure 3 shows schematically a preferred embodiment of a reinforcing profile formed by bending a very thin metal sheet into a profile that constitutes a reinforcing element. The reinforcing element is thus firm yet light and incombustible. Such profiles can be manufactured with various cross-sections, and a simple example thereof is shown in Figure 3. A reinforcing profile can be manufactured not only by bending but also though extrusion or in some other manner known per se.

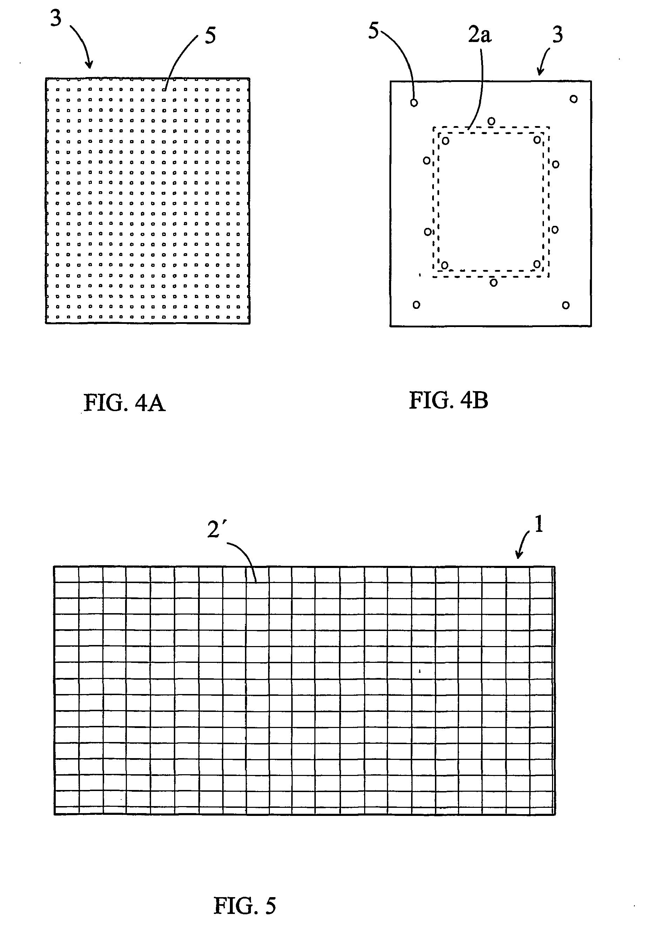

Figures 4a and 4b show schematically two alternatives of a perforated metal sheet, which can be used to manufacture a surface element according to the invention. Figure 4a shows a metal sheet perforated with substantially evenly spaced small holes 5, through which air is able to flow between the plastic film and the metal sheet. Figure 4b in turn shows an embodiment where broken lines denote locations 2a of the reinforcing elements, and a few holes 5 which can be located in different manners, but which are placed in this case near the reinforcing element. The number and size of the holes can vary considerably, as long as the metal sheet is provided with holes, if required, through which air can be discharged from between the plastic surface layer 4 and the metal sheet 3 while the surface layer is being pressed to the metal sheet.

Figure 5 shows schematically yet another embodiment of a surface element according to the invention. In this embodiment, the reinforcing element 2' consists of a netlike structure shown in the figure as a grid by way of an example. The operation of such a netlike structure as a reinforcing element is similar to other reinforcing elements, and it adheres to the metal sheet by means of a plastic surface layer similarly as the other reinforcing elements. When this embodiment is applied in connection with larger surface elements, in particular, any small deformations occurring in a surface element as a result of thermal variation are almost unnoticeable since there are no large and uniform reflecting surfaces in the surface elements due to such a netlike structure. A netlike reinforcing element can consist of for example crosswise threads made of a suitable material, or it can be a woven net or some other net formed in a suitable manner.

In the arrangement according to the invention, the material of the surface element can be steel, aluminium or some other metal suitable for the purpose. The reinforcing elements can be manufactured e.g. from wood, various rigid materials made of fibres, such as MDF sheets, or plastic or metal, depending on the intended use and the fire safety regulations in the destination. With respect to the prior art arrangements, the invention enables the use of a metal sheet that is up to 50% thinner for the manufacture of a surface element, while providing surface elements with better properties, however. The most advantageous method is to preform metal sheets into a desired shape of the surface elements before the reinforcing elements and the surface layer are attached thereto. In principle, a surface element can also be a straight sheet if it is attached to a suitable place either by means of profiles or some other suitable fasteners, such as screws. What is essential is that the surface of the metal sheet is provided with reinforcing elements, and that a thermoplastic surface layer is attached onto the surface of both the metal sheet and the reinforcing elements to affix the sheet and the elements together, thus forming a surface element with them. The reinforcing elements can be placed on the surface of the metal sheet without any substantial fastening, since the plastic surface layer affixes them firmly to the metal sheet. However, if required, the reinforcing elements can be fastened during the coating e.g. mechanically or by means of gluing only to such a degree that they stay immobile while the surface layer is being fastened.

Furthermore, if a surface element should be perforated for acoustic or other reasons, so that an acoustic sheet which attenuates sound can be placed behind it, the coating element can be easily perforated in a desired manner after gluing of the surface layer, or if the surface element is already provided with holes of a suitable shape, the surface layer can be removed from the holes afterwards.

## Claims

1. A method of manufacturing a surface element from a thin metal sheet in which method at least one reinforcing element is placed on the surface of the metal sheet substantially parallel with the surface of the sheet, **characterized in that,**
a thermoplastic surface layer covering the metal sheet and the reinforcing elements is glued onto the metal sheet and the reinforcing elements by pressing the thermoplastic surface layer against the metal sheet and the reinforcing elements so that the thermoplastic surface layer fastens the metal sheet and the reinforcing elements together thus forming the surface element with them and
the thermoplastic surface layer is heated during the gluing so that it conforms substantially to the outer surface formed by the metal sheet and the reinforcing elements and forms a facing on the surface element.

2. A method according to claim 1, **characterized in that** the reinforcing elements are made of incombustible material.

3. A method according to claim 2, **characterized in that** the reinforcing elements are profiles formed of a thin metal sheet.

4. A method according to claim 1, **characterized in that** the reinforcing elements are made of MDF.

5. A method according to any one of the preceding claims, **characterized in that** the metal sheet is perforated before coating with a plastic surface layer.

6. A method according to claim 5, **characterized in that** the metal sheet used to manufacture a surface element is substantially evenly perforated.

7. A method according to any one of the preceding claims, **characterized in that** a surface element is manufactured by first bending a metal sheet into a predetermined shape and by fastening reinforcing profiles and a plastic film to the surface of the metal sheet bent into a predetermined shape.

8. A surface element formed of a thin metal sheet whereby on the surface of the metal sheet there is at least one reinforcing element substantially parallel with the surface, **characterized in that** a thermoplastic surface layer covering the metal sheet and the reinforcing elements is glued onto the surface of the metal sheet and the reinforcing elements so that it fastens the metal sheet and the reinforcing elements together, thus forming the surface element with them, the thermoplastic surface layer being heated and pressed substantially against the outer surface formed by the metal sheet and the reinforcing elements during the gluing so that it conforms substantially to the outer surface formed by the metal sheet and the reinforcing elements and forms a facing on the surface element.

9. A surface element according to claim 8, **characterized in that** the reinforcing elements are made of incombustible material.

10. A surface element according to claim 9, **characterized in that** the reinforcing elements are profiles formed of a thin metal sheet.

11. A surface element according to claim 8, **characterized in that** the reinforcing elements are made of MDF.

12. A surface element according to any one of claims 8 to 11, **characterized in that** the metal sheet is perforated.

13. A surface element according to claim 12, **characterized in that** the metal sheet is substantially evenly perforated.

14. A surface element according to any one of claims 8 to 13, **characterized in that** the metal sheet is first bent into a predetermined shape, and the reinforcing elements and the plastic film are attached to the surface of the metal sheet only thereafter.

## Patentansprüche

1. Verfahren zum Herstellen eines Oberflächenelements aus einem dünnen Metallblech, wobei in dem Verfahren wenigstens ein Verstärkungselement auf der Oberfläche des Metallblechs im Wesentlichen parallel zu der Oberfläche des Blechs angeordnet wird, **dadurch gekennzeichnet,**
**dass** eine thermoplastische Oberflächenschicht, die das Metallblech bedeckt, und die Verstärkungselemente auf das Metallblech und die Verstärkungselemente geklebt werden, indem die thermoplastische Oberflächenschicht gegen das Metallblech und die Verstärkungselemente gedrückt wird, so dass die thermoplastische Oberflächenschicht das Metallblech und die Verstärkungselemente miteinander befestigt, um somit das Oberflächenelement mit diesen auszubilden und **dadurch**,
**dass** die thermoplastische Oberflächenschicht während des Verklebens erwärmt wird, so dass diese im Wesentlichen der äußeren Oberfläche entspricht, die durch das Metallblech und die Verstärkungselemente ausgebildet wird, und eine Außenschicht auf dem Oberflächenelement ausbildet.

2. Verfahren nach Anspruch 1, **dadurch gekennzeichnet, dass** die Verstärkungselemente aus nicht brennbarem Material hergestellt sind.

3. Verfahren nach Anspruch 2, **dadurch gekennzeichnet, dass** die Verstärkungselemente Profile sind, die aus einem dünnen Metallblech ausgebildet sind.

4. Verfahren nach Anspruch 1, **dadurch gekennzeichnet, dass** die Verstärkungselemente aus MDF hergestellt sind.

5. Verfahren nach einem der vorhergehenden Ansprüche, **dadurch gekennzeichnet, dass** das Metallblech vor der Beschichtung mit einer Kunststoffoberflächenschicht perforiert wird.

6. Verfahren nach Anspruch 5, **dadurch gekennzeichnet, dass** das Metallblech, der für die Herstellung eines Oberflächenelements verwendet wird, im Wesentlichen gleichmäßig perforiert ist.

7. Verfahren nach einem der vorhergehenden Ansprüche, **dadurch gekennzeichnet, dass** ein Oberflächenelement hergestellt wird, indem zunächst ein Metallblech in eine vorbestimmte Form gebogen wird und indem Verstärkungsprofile und ein Kunststofffilm auf der Oberfläche des Metallblechs befestigt werden, das in eine vorbestimmte Form gebogen ist.

8. Oberflächenelement, das aus einem dünnen Metallblech ausgebildet ist, wobei sich auf der Oberfläche des Metallblechs wenigstens ein Verstärkungselement befindet, das im Wesentlichen parallel mit der Oberfläche ist, **dadurch gekennzeichnet, dass** eine thermoplastische Oberflächenschicht das Metallblech abdeckt und die Verstärkungselemente auf die Oberfläche des Metallblechs und die Verstärkungselemente geklebt sind, so dass das Metallblech und die Verstärkungselemente miteinander befestigt sind, um somit das Oberflächenelement mit diesen auszubilden, wobei die thermoplastische Oberflächenschicht erwärmt wird und im Wesentlichen gegen die äußere Oberfläche gedrückt wird, die von dem Metallblech und den Verstärkungselementen ausgebildet wird, und zwar während des Verklebens, so dass diese im Wesentlichen der äußeren Oberfläche entspricht, die durch das Metallblech und die Verstärkungselemente ausgebildet wird, und eine Außenschicht auf dem Oberflächenelement ausbildet.

9. Oberflächenelement nach Anspruch 8, **dadurch gekennzeichnet, dass** die Verstärkungselemente aus einem nicht brennbaren Material hergestellt sind.

10. Oberflächenelemente nach Anspruch 9, **dadurch gekennzeichnet, dass** die Verstärkungselemente Profile sind, die aus einem dünnen Metallblech ausgebildet sind.

11. Oberflächenelement nach Anspruch 8, **dadurch gekennzeichnet, dass** die Verstärkungselemente aus MDF hergestellt sind.

12. Oberflächenelement nach einem der Ansprüche 8 bis 11, **dadurch gekennzeichnet, dass** das Metallblech perforiert ist.

13. Oberflächenelement nach Anspruch 12, **dadurch gekennzeichnet, dass** das Metallblech im Wesentlichen gleichmäßig perforiert ist.

14. Oberflächenelement nach einem der Ansprüche 8 bis 13, **dadurch gekennzeichnet, dass** das Metallblech zunächst in eine vorbestimme Form gebogen wird und die Verstärkungselemente und der Kunststofffilm an die Oberfläche des Metallblechs lediglich anschließend angebracht werden.

## Revendications

1. Procédé de fabrication d'un élément de surface à partir d'une feuille de métal mince, dans lequel au moins un élément de renfort est placé sur la surface de la feuille de métal de manière substantiellement parallèle à la surface de la feuille, **caractérisé en ce que**
une couche superficielle thermoplastique recouvrant la feuille de métal et les éléments de renfort est collée sur la feuille de métal et les éléments de renfort par pressage de la couche superficielle thermoplastique contre la feuille de métal et les éléments de renfort de telle sorte que la couche superficielle thermoplastique vienne fixer la feuille de métal aux éléments de renfort, formant ainsi, avec eux, l'élément de surface, et
la couche superficielle thermoplastique est chauffée pendant l'étape de collage de telle sorte qu'elle se conforme substantiellement à la surface extérieure constituée par la feuille de métal et les éléments de renfort et forme un revêtement sur l'élément de surface.

2. Procédé selon la revendication 1, **caractérisé en ce que** les éléments de renfort sont faits de matériau incombustible.

3. Procédé selon la revendication 2, **caractérisé en ce que** les éléments de renfort sont des profilés constitués d'une feuille de métal mince.

4. Procédé selon la revendication 1, **caractérisé en ce que** les éléments de renfort sont faits de MDF (fibres de bois).

5. Procédé selon l'une quelconque des revendications précédentes, **caractérisé en ce que** la feuille de métal est perforée avant d'être enduite d'une couche superficielle de matière plastique.

6. Procédé selon la revendication 5, **caractérisé en ce que** la feuille de métal utilisée pour fabriquer un élément de surface est substantiellement perforée de manière uniforme.

7. Procédé selon l'une quelconque des revendications précédentes, **caractérisé en ce qu'**un élément de surface est fabriqué dans un premier temps par pliage d'une feuille de métal selon une forme prédéterminée, puis par fixation des profilés de renfort et d'une feuille de matière plastique sur la surface de la feuille de métal pliée selon une forme prédéterminée.

8. Elément de surface constitué d'une feuille de métal mince dont au moins un élément de renfort est substantiellement parallèle à la surface de la feuille de métal, **caractérisé en ce qu'**une couche superficielle thermoplastique recouvrant la feuille de métal et les éléments de renfort est collée sur la surface de la feuille de métal et des éléments de renfort de telle sorte qu'elle vienne fixer la feuille de métal aux éléments de renfort, formant ainsi l'élément de surface avec eux, la couche superficielle thermoplastique étant chauffée et pressée substantiellement contre la surface extérieure formée par la feuille de métal et les éléments de renfort lors de l'étape de collage, de telle sorte qu'elle se conforme sensiblement à la surface extérieure constituée par la feuille de métal et les éléments de renfort et forme un revêtement sur l'élément de surface.

9. Elément de surface selon la revendication 8, **caractérisé en ce que** les éléments de renfort sont faits de matériau incombustible.

10. Elément de surface selon la revendication 9, **caractérisé en ce que** les éléments de renfort sont des profilés constitués d'une feuille de métal mince.

11. Elément de surface selon la revendication 8, **caractérisé en ce que** les éléments de renfort sont faits de MDF (fibres de bois).

12. Elément de surface selon l'une quelconque des revendications 8 à 11, **caractérisé en ce que** la feuille de métal est perforée.

13. Elément de surface selon la revendication 12, **caractérisé en ce que** la feuille de métal est perforée de manière substantiellement uniforme.

14. Elément de surface selon l'une quelconque des revendications 8 à 13, **caractérisé en ce que** la feuille de métal est d'abord pliée selon une forme prédéterminée, et **en ce que** les éléments de renfort et la feuille de matière plastique sont fixés à la surface de la feuille de métal seulement par la suite.
